# EUROPEAN PATENT APPLICATION

(11) **EP 4 818 242 A1**
(43) Date of publication of application: **07.10.2026**
(21) Application number: 26167094.7
(22) Date of filing: 24.03.2026
(51) Int. Cl.: C08J 9/00, C08J 9/12, C08J 9/18, B29C 44/34, C08K 3/28

(54) **METHOD FOR PRODUCING POLYOLEFIN-BASED RESIN EXPANDED BEADS AND POLYOLEFIN-BASED RESIN EXPANDED BEADS**

(30) Priority: 31.03.2025 JP 2025059007; 17.12.2025 JP 2025262086
(71) Applicant: JSP Corporation, Tokyo 100-0005 (JP)
(72) Inventor: Chiba, Takuya, Tokyo, 100-0005 (JP); Suenaga, Katsuyuki, Tochigi, 322-0014 (JP)
(74) Representative: KBN IP Patentanwälte Partnerschaft mbB

(57) **Abstract**

Provided are a method for producing polyolefin-based resin expanded beads capable of achieving a high expansion ratio and suppressing formation of suppressing formation of by using talc, and polyolefin-based resin expanded beads containing talc and having a high expansion ratio and suppressed formation of excessive cells.

The production method includes releasing carbon dioxide-containing polyolefin-based resin particles dispersed in an aqueous medium in a sealed vessel from the inside of the sealed vessel at a pressure lower than the pressure in the sealed vessel and expanding the polyolefin-based resin particles. The polyolefin-based resin particles contain ammonium nitrate and talc.

## Description

### BACKGROUND

### Technical Field

The present invention relates to a method for producing polyolefin-based resin expanded beads and polyolefin-based resin expanded beads.

### Related Art

Conventionally, a technique is known in which a cell nucleating agent is usually added when polyolefin-based resin expanded beads are produced.

For example, JP 2009-215485 A discloses a production method in which polyolefin-based resin expanded beads are produced by using an inorganic blowing agent such as carbon dioxide and using resin particles containing a polyolefin-based resin and a crystal water-containing inorganic compound. Talc is exemplified as the crystal water-containing inorganic compound, and it is disclosed that a compound such as talc insoluble or hardly soluble in water is preferable for exhibiting the effect of the cell nucleating agent.

### SUMMARY

In the case of containing talc as a cell nucleating agent and using carbon dioxide as a blowing agent, the ability of impregnating the polyolefin-based resin with carbon dioxide tended to be very low. Therefore, as disclosed in JP 2009-215485 A, it is possible to obtain polyolefin-based resin expanded beads by preparing resin particles using a polyolefin-based resin and talc and expanding the resin particles, but in this case, it has been difficult to obtain a sufficient expansion ratio.

The present invention has been made in view of the above problems, and provides a method for producing polyolefin-based resin expanded beads and polyolefin-based resin expanded beads capable of achieving a high expansion ratio.

A method for producing polyolefin-based resin expanded beads of the present invention is a method for producing polyolefin-based resin expanded beads, the method including: releasing carbon dioxide-containing polyolefin-based resin particles dispersed in an aqueous medium in a sealed vessel from the inside of the sealed vessel at a pressure lower than the pressure in the sealed vessel; and expanding the polyolefin-based resin particles, in which the polyolefin-based resin particles contain ammonium nitrate and talc.

In polyolefin-based resin expanded beads of the present invention, an average cell diameter of the polyolefin-based resin expanded beads is 20 µm or more and 250 µm or less, and the polyolefin-based resin expanded beads contain ammonium nitrate and talc.

The method for producing polyolefin-based resin expanded beads of the present invention can produce polyolefin-based resin expanded beads having a high expansion ratio even though talc is used as a cell nucleating agent.

### BRIEF DESCRIPTION OF DRAWING

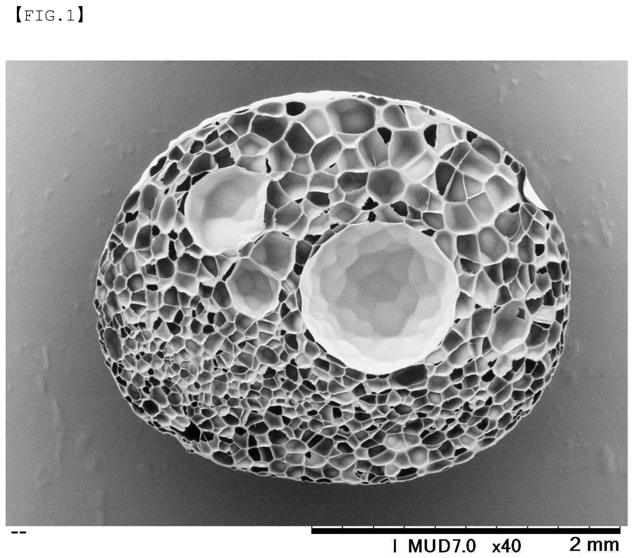

FIG. 1 is a photograph of a cut surface formed by cutting expanded beads of Comparative Example 2 into substantially two equal parts.

### DETAILED DESCRIPTION

First, an outline of the present invention will be described below. Note that, hereinafter, a method for producing polyolefin-based resin expanded beads of the present invention may be referred to as the production method of the present invention.

The production method of the present invention is a method for producing polyolefin-based resin expanded beads, the method including: releasing carbon dioxide-containing polyolefin-based resin particles dispersed in an aqueous medium in a sealed vessel from the inside of the sealed vessel at a pressure lower than the pressure in the sealed vessel; and expanding the polyolefin-based resin particles.

In the production method of the present invention, the polyolefin-based resin particles to which ammonium nitrate and talc are added are used.

According to the production method of the present invention having such a configuration, it is possible to produce expanded beads having a high expansion ratio by using talc as a cell nucleating agent and using ammonium nitrate. Of course, in the production method of the present invention, it is also possible to produce polyolefin-based resin expanded beads in which the expansion ratio is appropriately suppressed, and it is possible to provide a polyolefin resin expanded beads molded article using the polyolefin-based resin expanded beads.

Details of the present invention will be further described below. Note that, with respect to the number of carbon atoms in the present invention, the description of "Y (number) to X (number)" is read as Y or more and X or less. In the following description, a preferable numerical range of the present invention may be indicated as appropriate. In this case, a preferred range, a more preferred range, and a particularly preferred range regarding the upper limit and the lower limit of the numerical range can be determined from all combinations of the upper limit and the lower limit.

### <Polyolefin-based resin particles>

The polyolefin-based resin particles used in the production method of the present invention contain a polyolefin-based resin, talc, and ammonium nitrate.

In the polyolefin-based resin particles, 50 mass% or more in 100 mass% of the resin constituting the resin particles is a polyolefin-based resin, and other resins, which are other than the polyolefin-based resin, may be appropriately mixed.

As the polyolefin-based resin, for example, a polyethylene-based resin, a polypropylene-based resin, polybutene, polypentene, and a copolymer of an olefin-based monomer and another monomer can be used. The polyolefin-based resin is preferably one or more selected from a polyethylene-based resin and a polypropylene-based resin, and more preferably a polypropylene-based resin.

In the present invention, the resin contained in an amount of 50 mass% or more based on 100 mass% of the resin constituting the resin particles and having the largest addition amount is referred to as a base material resin. That is, in the present invention, the polyolefin-based resin is the base material resin. The polyolefin-based resin in 100 mass% of the resin constituting the resin particles is preferably 80 mass% or more, more preferably 90 mass% or more, still more preferably 95 mass% or more, and particularly preferably 100 mass%.

The resin constituting the polyolefin-based resin particles in 100 mass% of the polyolefin-based resin particles is preferably 85 mass% or more, more preferably 90 mass% or more, and still more preferably 95 mass% or more. On the other hand, the upper limit of the addition amount of the resin in 100 mass% of the polyolefin-based resin particles can be determined in consideration of the addition amounts of talc and ammonium nitrate contained in the polyolefin-based resin particles.

### [Polypropylene-based resin]

The polypropylene-based resin as a base material resin refers to a propylene homopolymer and/or a propylene-based copolymer containing 50 mass% or more of a structural unit derived from propylene. Examples of the propylene homopolymer include isotactic polypropylene, syndiotactic polypropylene, and atactic polypropylene. These resins exemplified as the propylene homopolymer may be used singly or as a mixture of two or more kinds thereof.

In the propylene-based copolymer, the content of the structural unit derived from propylene in the polypropylene-based resin is preferably 80 mass% or more, and more preferably 90 mass% or more. The content of the structural unit derived from propylene in the propylene-based copolymer is preferably 99 mass% or less, and more preferably 98 mass% or less. Examples of such a propylene-based copolymer include copolymers of propylene and ethylene or/and an α-olefin having 4 to 20 carbon atoms. Examples of the α-olefin include 1-butene, 1-pentene, 1-hexene, 1-octene, and 4-methyl-1-butene. Examples of other propylene-based copolymers include an ethylene-propylene random copolymer, a propylene-butene random copolymer, and an ethylene-propylene-butene random copolymer. These propylene-based copolymers may be, for example, random copolymers or block copolymers, but are preferably random copolymers. Examples of the propylene-based copolymer include impact resistant polypropylene (block polypropylene) composed of two or more phases including a continuous phase of a propylene polymer and a rubber phase present as a dispersed phase in the continuous phase. Examples of the material constituting the rubber phase include an ethylene-α-olefin copolymer.

These resins exemplified as the propylene-based copolymer may be used singly or as a mixture of two or more kinds thereof.

The polypropylene-based resin may be a linear polypropylene-based resin, a branched polypropylene-based resin, or a combination thereof.

Examples of the polyethylene-based resin as a base material resin include an ethylene homopolymer and an ethylene-based copolymer containing 50 mass% or more of a structural unit derived from ethylene. Specific examples of the polyethylene-based resin include low-density polyethylene, high-density polyethylene, linear low-density polyethylene, very-low-density polyethylene, an ethylenevinyl acetate copolymer, an ethylene-methyl methacrylate copolymer, an ethylene-methacrylic acid copolymer, and an ionomer-based resin obtained by crosslinking molecules of an ethylene-methacrylic acid copolymer with a metal ion. When the polyethylene-based resin is a copolymer, the copolymer may be any of a block copolymer, a random copolymer, and a graft copolymer.

The polymer may be crosslinked, but is preferably non-crosslinked.

The melting point of the polypropylene-based resin used as the polyolefin-based resin is preferably 155°C or lower. By using the expanded beads of the present invention using a polyolefin-based resin having a melting point in the above range, an expanded beads molded article excellent in appearance can be molded at a lower molding temperature. From the viewpoint of improving this effect, the melting point of the polyolefin-based resin is more preferably 150°C or lower, and still more preferably 145°C or lower. On the other hand, from the viewpoint of further improving the heat resistance, mechanical strength, and the like of the expanded beads molded article, the melting point of the polyolefin-based resin is preferably 130°C or higher, more preferably 135°C or higher, and still more preferably 138°C or higher.

The melting point of the polyethylene-based resin used as the polyolefin-based resin is preferably 140°C or lower. By using the expanded beads of the present invention using a polyolefin-based resin having a melting point in the above range, it is possible to obtain expanded beads that exhibit excellent fusion-bonding properties and moldability even when molded at a low molding temperature. From the viewpoint of improving this effect, the melting point of the polyolefin-based resin is more preferably 135°C or lower, and still more preferably 130°C or lower.
On the other hand, from the viewpoint that a molded article after in-mold molding is less likely to shrink or deform after demolding and exhibits excellent recovery properties, the melting point of the polyolefin-based resin is preferably 110°C or higher, more preferably 115°C or higher, and still more preferably 120°C or higher.

### [Other resins]

The resin constituting the polyolefin-based resin particles may be composed of only the above-described polyolefin-based resin, or may contain other resins together with the polyolefin-based resin as long as the object and effect of the invention are not impaired. The other resins used for the resin may be one kind or a combination of two or more kinds.

Examples of the other resins include resins selected from the group consisting of a thermoplastic resin other than the polyolefin-based resin and a thermoplastic elastomer. Note that, in the present invention, the term "other resins" includes not only a general resin but also an elastomer that can be used for producing expanded beads.

Examples of the thermoplastic resin include a polystyrene-based resin, a polycarbonate resin, a polyvinyl chloride-based resin, a polymethacryl-based resin, an acrylonitrile-based resin, a polyester-based resin, a polyamide-based resin, and blend polymers thereof.

Examples of the thermoplastic elastomer include an olefin-based thermoplastic elastomer (TPO) and a urethane-based thermoplastic elastomer (TPU).

The addition amount of the other resins in 100 mass% of the resin constituting the resin particles is preferably 20 mass% or less, more preferably 10 mass% or less, still more preferably 5 mass% or less, and particularly preferably 0 mass%. That is, it is particularly preferable that the resin constituting the polyolefin-based resin particles is substantially composed only of the polyolefin-based resin.

### [Talc]

The talc related to the present invention refers to a mineral mainly composed of hydrous magnesium silicate (3MgO ·4SiO₂·H₂O).

For example, as shown in JP 2009-215485 A, it is known to add talc as a cell nucleating agent to polypropylene-based resin particles. However, when carbon dioxide is used as a blowing agent and talc is used as a cell nucleating agent, it is difficult to show a high expansion ratio. Therefore, the present inventors have intensively studied such a problem. When talc is blended in the resin particles, carbon dioxide as a blowing agent makes it difficult to increase the expansion ratio of the expanded beads, and when an attempt is made to increase the expansion ratio, excessive cells are easily generated in the expanded beads. The present inventors have found that when such carbon dioxide is used as a blowing agent, a high expansion ratio can be achieved by adding ammonium nitrate together with talc.

From the viewpoint of efficiently increasing the expansion ratio of the expanded beads while suppressing the addition amount of talc, the addition amount of the talc is preferably 0.01 parts by mass or more and 0.5 parts by mass or less, more preferably 0.05 parts by mass or more and 0.4 parts by mass or less, and still more preferably 0.07 parts by mass or more and 0.3 parts by mass or less with respect to 100 parts by mass of the resin constituting the polyolefin-based resin particles.

In other words, the addition amount of the talc is preferably 0.01 parts by mass or more, more preferably 0.05 parts by mass or more, and still more preferably 0.07 parts by mass or more with respect to 100 parts by mass of the resin constituting the polyolefin-based resin particles. The addition amount of the talc is preferably 0.5 parts by mass or less, more preferably 0.4 parts by mass or less, and still more preferably 0.3 parts by mass or less with respect to 100 parts by mass of the resin constituting the polyolefin-based resin particles.

Note that the content of talc in the expanded beads can be appropriately calculated from the material used for producing the resin particles used for producing the expanded beads. The content of talc in the expanded beads may be directly measured by a conventionally known method.

### [Ammonium nitrate]

The polyolefin-based resin particles in the production method of the present invention contain ammonium nitrate together with the above-described talc.

In the production method of the present invention, it was found that when talc and ammonium nitrate are used in combination, polyolefin-based resin expanded beads having a low apparent density are obtained by the synergistic effect of talc and the ammonium nitrate. In the present invention, ammonium nitrate contributes to high expansion of expanded beads, and thus can also be understood as a blowing auxiliary agent.

Ammonium nitrate is a crystalline solid at normal temperature, and can be prepared from a granular form to a powder form. Therefore, handling properties are favorable at the time of producing resin particles, and addition to other members is easy. Ammonium nitrate is a non-chlorine-based compound, and is also preferable in that it is not necessary to consider generation of rust on a metallic device used in a production process.

In the production method of the present invention, the addition amount of ammonium nitrate with respect to the resin constituting the polyolefin-based resin particles is preferably adjusted to 0.02 parts by mass or more and 0.6 parts by mass or less with respect to 100 parts by mass of the resin constituting the polyolefin-based resin particles. From the viewpoint of securing a wide moldable pressure range, easily balancing with the addition amount of talc, and easily in-mold molding an expanded beads molded article having a more excellent appearance, the addition amount of ammonium nitrate is more preferably 0.03 parts by mass or more and 0.5 parts by mass or less, still more preferably 0.04 parts by mass or more and 0.4 parts by mass or less, and particularly preferably 0.05 parts by mass or more and 0.3 parts by mass or less with respect to 100 parts by mass of the resin constituting the polyolefin-based resin particles. Note that the content of ammonium nitrate in the resin particles can be determined by the same method as the content of talc.

In other words, the addition amount of ammonium nitrate with respect to the resin constituting the polyolefin-based resin particles is preferably 0.02 parts by mass or more, more preferably 0.03 parts by mass or more, still more preferably 0.04 parts by mass or more, and particularly preferably 0.05 parts by mass or more with respect to 100 parts by mass of the resin constituting the polyolefin-based resin particles. The addition amount of ammonium nitrate with respect to the resin constituting the polyolefin-based resin particles is preferably 0.6 parts by mass or less, more preferably 0.5 parts by mass or less, still more preferably 0.4 parts by mass or less, and particularly preferably 0.3 parts by mass or less with respect to 100 parts by mass of the resin constituting the polyolefin-based resin particles.

### [Mixing ratio of talc and ammonium nitrate]

In the production method of the present invention, the ratio of the addition amount of ammonium nitrate to the addition amount of talc is adjusted to preferably 0.2 or more and 6 or less, more preferably 0.3 or more and 5 or less, still more preferably 0.4 or more and 4 or less, and particularly preferably 0.5 or more and 3 or less in terms of a mass ratio.

In other words, the ratio of the addition amount of the ammonium nitrate to the addition amount of the talc is preferably 0.2 or more, more preferably 0.3 or more, still more preferably 0.4 or more, and particularly preferably 0.5 or more in terms of a mass ratio. The ratio of the addition amount of the ammonium nitrate to the addition amount of the talc is preferably 6 or less, more preferably 5 or less, still more preferably 4 or less, and particularly preferably 3 or less in terms of a mass ratio.

When the ratio of the addition amount of ammonium nitrate to the addition amount of talc is 0.2 or more in terms of a mass ratio, it is easy to realize an appropriately low apparent density, and when the ratio is 6 or less, it is easy to appropriately lower the apparent density and to suppress the formation of excessive cells. The reason for this is not clear, but it is considered that the interaction between talc functioning as a cell nucleating agent and ammonium nitrate has an influence. Note that, in the present invention, the term "excessive cell" refers to a cell having an area of 5% or more of the area of a cut surface formed by cutting the obtained expanded bead into substantially two equal parts. When the ratio of the addition amount of ammonium nitrate to the addition amount of talc satisfies the above range, the pressure range in which molding is possible when the expanded beads are in-mold molded is wide, and an expanded beads molded article excellent in appearance can be easily obtained.

From the viewpoint of efficiently increasing the expansion ratio of the expanded beads while suppressing the addition amounts of talc and ammonium nitrate, the total of the addition amount of the talc and the addition amount of the ammonium nitrate is preferably 0.03 parts by mass or more and 0.7 parts by mass or less, still more preferably 0.04 parts by mass or more and 0.5 parts by mass or less, and still more preferably 0.07 parts by mass or more and 0.4 parts by mass or less with respect to 100 parts by mass of the resin constituting the polyolefin-based resin particles.

In other words, the total of the addition amount of the talc and the addition amount of the ammonium nitrate is preferably 0.03 parts by mass or more, more preferably 0.04 parts by mass or more, and still more preferably 0.07 parts by mass or more with respect to 100 parts by mass of the resin constituting the polyolefin-based resin particles. The total of the addition amount of the talc and the addition amount of the ammonium nitrate is preferably 0.7 parts by mass or less, more preferably 0.5 parts by mass or less, and still more preferably 0.4 parts by mass or less with respect to 100 parts by mass of the resin constituting the polyolefin-based resin particles.

### [Other additives]

The polyolefin-based resin particles may appropriately contain other additives in addition to the resin, talc, and ammonium nitrate described above.

Examples of the other additives include any one kind or a combination of two or more kinds of functional additives exemplified by a colorant exemplified by carbon black, an organic compound for cell adjustment, an antioxidant, an antistatic agent, a surfactant, a heat stabilizer, a light stabilizer, an ultraviolet absorber, and a flame retardant. Some more effective additives are described below.

### Antioxidant:

The thermal decomposition temperature of ammonium nitrate is about 200°C. Meanwhile, depending on the type of the resin constituting the polyolefin-based resin particles, an extrusion step, which is performed to prepare pellet-shaped resin particles, may be performed at a temperature at which the extrusion temperature during the extrusion step exceeds 200°C. When ammonium nitrate is thermally decomposed by heating during extrusion, cells may be generated in resin particles to be obtained. Although the cause is not clear, it is presumed that this is because gases such as nitrogen and oxygen are generated by thermal decomposition of ammonium nitrate. When cells are generated in the resin particles, it is preferable that there are few or no cells in the resin particles since it may be a factor of inducing generation of excessive cells in the expanded beads and making variations in the cell diameter remarkable.

On the other hand, by adding a hindered phenol-based antioxidant into the polyolefin-based resin particles, generation of cells in resin particles to be obtained can be suppressed even when the extrusion temperature during the extrusion step is set to a temperature exceeding 200°C. In order to more sufficiently exhibit the effect of suppressing the generation of cells due to the thermal decomposition, the hindered phenol-based antioxidant is added preferably in a range of 0.01 parts by mass or more and 1 part by mass or less, more preferably in a range of 0.05 parts by mass or more and 0.8 parts by mass or less, and still more preferably in a range of 0.1 parts by mass or more and 0.6 parts by mass or less with respect to 100 parts by mass of the resin constituting the polyolefin-based resin particles. The hindered phenol-based antioxidant contained in the polyolefin-based resin particles may be one kind or two or more kinds.

Examples of the hindered phenol-based antioxidant include Irganox1010 (pentaerythritol tetrakis[3-(3,5-di-tert-butyl-4-hydroxyphenyl)propionate]), Irganox1330 (3,3',3'',5,5',5''-hexa-tert-butyl-α,α',α''-(mesitylene-2,4,6-tolyl)tri-p-cresol), Irganox1035 (thiodiethylene bis[3-(3,5-di-tert-butyl-4-hydroxy-phenyl)propionate]), Irganox1076 (octadecyl-3-(3,5-di-tert-butyl-4-hydroxyphenyl)-propionate), and Irganox1135 (benzenepropanoic acid, 3,5-bis(1,1-dimethylethyl)-4-hydroxy-C7-C9 branched alkyl ester) manufactured by BASF SE. Similarly, examples of the hindered phenol-based antioxidant include SUMILIZER GA-80 (bis[3-[3-(tert-butyl)-4-hydroxy-5-methylphenyl]propanoic acid]2,4,8,10-tetraoxaspiro[5.5]undecane-3,9-diylbis(2-methylpropane-2,1-diyl)), and SUMILIZER WX-R(4,4'-thiobis(6-tert-butyl-m-cresol) manufactured by Sumitomo Chemical Co., Ltd. Note that "Irganox" is a registered trademark of BASF SE Europe, and "SUMILIZER" is a registered trademark of Sumitomo Chemical Co., Ltd.

The thermal decomposition temperature of the ammonium nitrate can be measured using thermogravimetry (TG) and differential thermal analysis (DTA). The thermal decomposition temperature can be determined from the peak temperature of the endothermic reaction when ammonium nitrate in an absolute dry state is heated, the weight of TG is changed, and a peak due to the endothermic reaction of DTA is shown. The measurement is performed in a nitrogen atmosphere.

### Carbon black:

A black polyolefin-based resin expanded beads molded article is used in various fields including the automobile field. Therefore, it is one of preferred embodiments that the polyolefin-based resin expanded beads contain carbon black as another additive.

Examples of the carbon black used in the present invention include gas furnace black, oil furnace black, acetylene black, channel black, roller black, thermal black, and ketjen black.

When the polyolefin-based resin expanded beads containing carbon black are produced, the addition amount of carbon black is preferably 0.5 parts by mass or more and 5.0 parts by mass or less, more preferably 1 part by mass or more and 4.5 parts by mass or less, and still more preferably 1.5 parts by mass or more and 4.0 parts by mass or less with respect to 100 parts by mass of the resin constituting the polyolefin-based resin particles.

In other words, the addition amount of the carbon black is preferably 0.5 parts by mass or more, more preferably 1 part by mass or more, and still more preferably 1.5 parts by mass or more with respect to 100 parts by mass of the resin constituting the polyolefin-based resin particles. The addition amount of the carbon black is preferably 5.0 parts by mass or less, more preferably 4.5 parts by mass or less, and still more preferably 4.0 parts by mass or less with respect to 100 parts by mass of the resin constituting the polyolefin-based resin particles.

As a result, it is possible to provide black expanded beads which exhibit a high expansion ratio and are prevented from forming excessive cells while adding carbon black in an appropriate amount.

When the polyolefin-based resin expanded beads containing carbon black are produced, the ratio of the addition amount of the carbon black to the addition amount of the ammonium nitrate is preferably 1 or more and 50 or less, and more preferably 5 or more and 40 or less in terms of a mass ratio. By adjusting the ratio to such a range, it is easy to produce polyolefin-based resin expanded beads exhibiting sufficient blackness while sufficiently solving the problems of the present invention such as increasing of the expansion ratio and suppression of excessive cells.

### Organic compound for cell adjustment:

In order to more desirably solve the problem of the present invention, an organic compound for cell adjustment may be further added to the polyolefin-based resin particles in addition to ammonium nitrate.

Examples of the organic compound for cell adjustment include one or more organic compounds selected from the group consisting of a aliphatic carboxylic acid metal salt having 4 to 20 carbon atoms (provided that the metal of the aliphatic carboxylic acid metal salt is an alkali metal or an alkaline earth metal), and an aliphatic hydroxycarboxylic acid metal salt having 4 to 20 carbon atoms (provided that the metal of the aliphatic hydroxycarboxylic acid metal salt is an alkali metal or an alkaline earth metal). Among them, the organic compound for cell adjustment is preferably one or more organic compounds selected from the group consisting of a aliphatic carboxylic acid metal salt having 16 to 20 carbon atoms (provided that the metal of the aliphatic carboxylic acid metal salt is an alkali metal or an alkaline earth metal), and an aliphatic hydroxycarboxylic acid metal salt having 16 to 20 carbon atoms (provided that the metal of the aliphatic hydroxycarboxylic acid metal salt is an alkali metal or an alkaline earth metal). By adding the organic compound for cell adjustment, expanded beads having a moderately large cell diameter and a lower apparent density are easily obtained.

### [Method for preparing polyolefin-based resin particles]

In the production method of the present invention, the production of polyolefin-based resin particles can be carried out by a known method for producing resin particles, except that talc and ammonium nitrate are added to a resin containing a polyolefin-based resin.

Specifically, for example, there are the following methods. First, a resin containing the above-described polyolefin-based resin, talc, ammonium nitrate, and other additives added as necessary are supplied to an extruder and melt-kneaded to obtain a melt-kneaded product. Then, the melt-kneaded product is extruded into a strand shape from a strand forming die attached to the downstream side of the extruder at an appropriate extrusion temperature, and then the extruded strand-shaped product is cooled with water and cut with an apparatus exemplified by a pelletizer. In this way, pellet-shaped resin particles containing the polyolefin-based resin, talc, and ammonium nitrate can be obtained.

The method for adding talc and ammonium nitrate to the polyolefin-based resin particles is not limited to the above-described method. However, from the viewpoint of containing talc and ammonium nitrate in the polyolefin-based resin particles as evenly as possible, as described above, a method of kneading a resin containing a polyolefin-based resin, talc, and ammonium nitrate using an extruder to prepare a melt-kneaded product is preferable. From the viewpoint of suppressing thermal decomposition of ammonium nitrate while containing talc and ammonium nitrate in the polyolefin-based resin particles as evenly as possible, it is preferable to adopt an aspect in which the maximum temperature at the time of melt-kneading with an extruder is adjusted to about 200°C and/or an aspect in which the hindered phenol-based antioxidant is added. Furthermore, from the viewpoint of stably producing expanded beads having a high expansion ratio and suppressed generation of excessive cells in the expanded beads, it is preferable that in a step of preparing resin particles, a mixture obtained by mixing the talc and the ammonium nitrate in advance is prepared, and each of the mixture and the resin is supplied to an extruder and mixed in the extruder. From the same viewpoint, it is also preferable that in the step of preparing resin particles, a masterbatch containing the talc, the ammonium nitrate, and the resin is prepared, and the masterbatch is supplied to an extruder.

### <Expanding step>

In the production method of the present invention, polyolefin-based resin expanded beads are produced by performing an expanding step of expanding the above-described polyolefin-based resin particles.

In the expanding step, polyolefin-based resin expanded beads are produced by releasing carbon dioxide-containing polyolefin-based resin particles dispersed in an aqueous medium in a sealed vessel from the inside of the sealed vessel at a pressure lower than the pressure in the sealed vessel, and expanding the polyolefin-based resin particles.

A more specific example of the expanding step will be described below.

First, the resin particles are dispersed in a sealed vessel containing an aqueous medium exemplified by water, and for example, an inorganic dispersant exemplified by a poorly soluble inorganic salt and a viscosity mineral, and a dispersion auxiliary agent exemplified by a surfactant. Next, a blowing agent is added into the sealed vessel, and the resin particles are impregnated with the blowing agent. Then, both the resin particles containing the blowing agent and the aqueous medium are released from the sealed vessel in a pressure atmosphere lower than the pressure in the sealed vessel to expand the resin particles.

From the viewpoint of enhancing the productivity of the expanded beads, as described above, impregnation of the resin particles with the blowing agent and expansion of the resin particles containing the blowing agent are preferably performed as a series of steps using a single sealed vessel.

In the present invention, carbon dioxide is used as a blowing agent. A blowing agent other than carbon dioxide may be used in combination as long as the object and effect of the present invention are not impaired. Examples of other blowing agents include the following inorganic physical blowing agent and organic physical blowing agent.

Examples of the inorganic physical blowing agent include air, nitrogen, argon, helium, oxygen, and neon. Examples of the organic physical blowing agent include aliphatic hydrocarbons exemplified by propane, normal butane, isobutane, normal pentane, isopentane, and normal hexane, alicyclic hydrocarbons exemplified by cyclohexane and cyclopentane, halogenated hydrocarbons exemplified by ethyl chloride, 2,3,3,3-tetrafluoropropene, trans-1,3,3,3-tetrafluoropropene, and trans-1-chloro-3,3,3-trifluoropropene, and dialkyl ethers exemplified by dimethyl ether, diethyl ether, and methyl ethyl ether. The above-mentioned blowing agents can be used singly or in combination of two or more kinds thereof.

The addition amount of the blowing agent is determined in consideration of the desired apparent density of the expanded beads, the type of resin used, the type of the blowing agent, and the like, but the addition amount of carbon dioxide is preferably 0.1 parts by mass or more and 30 parts by mass or less, and more preferably 0.5 parts by mass or more and 15 parts by mass or less with respect to 100 parts by mass of the resin particles.

Note that the expanded beads obtained as described above can be further expanded in multiple stages to obtain expanded beads having a higher expansion ratio. For example, the obtained expanded beads are subjected to a pressure treatment with air or the like to increase the pressure in the cells of the expanded beads, and then two-stage expansion in which the expanded beads are further expanded by heating with steam or the like is performed, whereby expanded beads having a higher expansion ratio can be obtained.

The expanded beads produced by the production method of the present invention may be single-layer expanded beads having only a particulate foamed layer, or may be multilayer expanded beads. Examples of the multilayer expanded beads include multilayer expanded beads including a core layer formed of a foamed layer and a fusion-bonding layer covering at least a part of the surface of the core layer. The fusion-bonding layer is a layer for enhancing the fusion-bonding property between the expanded beads during in-mold molding, and may be present on the entire surface of the expanded beads or may be present on a part of the surface. The fusion-bonding layer may be a foamed layer or a non-foamed layer. Examples of the resin constituting the fusion-bonding layer include a polyolefin-based resin. The melting point or softening point of the resin constituting the fusion-bonding layer may be adjusted to be lower than the melting point of the resin constituting the core layer.

The method for forming the fusion-bonding layer on the surface of the expanded beads is not particularly limited, and examples thereof include a method in which resin particles having a fusion-bonding layer on the surface are expanded, and a method in which single-layer expanded beads are obtained, and then a fusion-bonding layer is attached to the surface of expanded beads. When resin particles having a fusion-bonding layer on the surface are expanded to obtain expanded beads, it is preferable to employ a method of providing a fusion-bonding layer on the surface of resin particles by co-extruding a melt-kneaded product for forming a core layer and a melt-kneaded product for forming a fusion-bonding layer using an extruder capable of co-extrusion when resin particles are produced. Note that, when multilayer expanded beads are produced in the production method of the present invention, the core layer preferably has the same configuration as the expanded beads described in the present specification.

From the viewpoint of adjusting the expanded beads of the present invention to a favorable crystal state, it is preferable that a melting peak (high-temperature peak) having a peak top temperature on the higher temperature side than the peak top temperature of the main melting peak (intrinsic peak) of the expanded beads appears in a DSC curve obtained by heat-flux differential scanning calorimetry in which the expanded beads are heated at a heating rate of 10°C/min from 23°C to a temperature higher than that at the end of the melting peak by 30°C in accordance with JIS K7121-1987.

The DSC curve in this case means a DSC curve (DSC curve in the first heating) obtained by heating the expanded beads by the above measurement method. The main melting peak (intrinsic peak) of the expanded beads means a peak generated by melting of the intrinsic crystal of the base material resin constituting the expanded beads. Note that the intrinsic peak is considered to be a peak that appears by melting of a crystal usually possessed by the base material resin constituting the expanded beads.

On the other hand, the melting peak (high-temperature peak) having a peak top temperature on the high temperature side of the intrinsic peak is a peak present on the higher temperature side than the intrinsic peak that can be confirmed by the first DSC curve. When this high-temperature peak appears, it is presumed that a secondary crystal different from a crystal usually contained in the base material resin constituting the expanded beads is present. Note that a DSC curve obtained when the expanded beads are heated at a heating rate of 10°C/min from 23°C to a temperature higher than that at the time of end of the melting peak by 30°C (first heating), then cooled at a cooling rate of 10°C/min from the temperature higher than that at the time of end of the melting peak by 30°C to 23°C, and then heated again at a heating rate of 10°C/min from 23°C to the temperature higher than that at the time of end of the melting peak by 30°C (second heating) is referred to as a DSC curve in the second heating. In the DSC curve in the second heating, only an intrinsic peak due to melting of a crystal usually possessed by the base material resin constituting the expanded beads appears. Since this intrinsic peak appears in both the DSC curve in the first heating and the DSC curve in the second heating, it is possible to confirm which peak is the intrinsic peak or the high-temperature peak by comparing the shape of each of the DSC curves of the first heating and the second heating with the peak position.

From the viewpoint of obtaining an expanded beads molded article excellent in the balance between buffering properties and stiffness by using the expanded beads, the heat of fusion at the high-temperature peak is preferably 10 J/g or more and 50 J/g or less, more preferably 11 J/g or more and 30 J/g or less, and still more preferably 13 J/g or more and 20 J/g or less.

### [Apparent density of expanded beads]

In the production method of the present invention, it is possible to produce polyolefin-based resin expanded beads showing a lower apparent density as compared with a case where only talc is used as a member used for cell adjustment. The apparent density of the expanded beads produced by the production method of the present invention is lower than the apparent density of comparative expanded beads produced in the same manner except that ammonium nitrate is not used, and is preferably 110 kg/m³ or less, more preferably 100 kg/m³ or less, still more preferably 90 kg/m³ or less, even further preferably 85 kg/m³ or less, and particularly preferably 80 kg/m³ or less from the viewpoint of exhibiting excellent lightweight properties.

The lower limit of the apparent density of the expanded beads produced by the production method of the present invention is not particularly limited, but is preferably 10 kg/m³ or more, more preferably 30 kg/m³ or more, still more preferably 50 kg/m³ or more, even further preferably 65 kg/m³ or more, and particularly preferably 70 kg/m³ or more from the viewpoint of more easily suppressing the generation of excessive cells.

In other words, the apparent density of the expanded beads produced by the production method of the present invention is preferably 10 kg/m³ or more and 110 kg/m³ or less, more preferably 10 kg/m³ or more and 100 kg/m³ or less, still more preferably 30 kg/m³ or more and 90 kg/m³ or less, and particularly preferably 50 kg/m³ or more and 85 kg/m³ or less.

In the production method of the present invention, it is possible to produce polyolefin-based resin expanded beads showing the above-described desirable apparent density range by using the above-described polyolefin-based resin particles. For example, by the production method of the present invention, it is possible to provide polyolefin-based resin expanded beads having an apparent density of 10 kg/m³ or more and 100 kg/m³ or less.

The apparent density of the expanded beads is determined by the following measurement method.

First, a measuring cylinder containing water at a temperature of 23°C is prepared, and about 500 ml of polyolefin-based resin expanded beads (mass W1) left for 2 days under conditions of a relative humidity of 50%, 23°C, and 1 atm are immersed in the measuring cylinder using a tool such as a wire mesh. Then, in consideration of the volume of the tool such as a wire mesh, a volume V1 (cm³) of the polyolefin-based resin expanded beads read from the water level rise is measured, and the mass W1 (g) of the polyolefin-based resin expanded beads put in the measuring cylinder is divided by the volume V1 (W1/V1), whereby the apparent density of the polyolefin-based resin expanded beads can be determined.

### <Polyolefin-based resin expanded beads>

Next, the polyolefin-based resin expanded beads of the present invention will be described. In the following description, the polyolefin-based resin expanded beads of the present invention may be referred to as the expanded beads of the present invention. The production method of the present invention described above is an example of a preferred production method of the expanded beads of the present invention, but does not limit the method for producing expanded beads of the present invention.

The expanded beads of the present invention are obtained by expanding the polyolefin-based resin particles described in the production method of the present invention. Therefore, for the description of the resin, the base material resin, talc, ammonium nitrate, other additives, and the like constituting the expanded beads of the present invention, the description of the production method of the present invention described above is appropriately referred to.

The expanded beads of the present invention are polyolefin-based resin expanded beads having a polyolefin-based resin as a base material resin, and ammonium nitrate and talc are contained in the expanded beads. The content of ammonium nitrate in the expanded beads of the present invention is preferably 0.02 parts by mass or more and 0.6 parts by mass or less, more preferably 0.03 parts by mass or more and 0.5 parts by mass or less, still more preferably 0.04 parts by mass or more and 0.4 parts by mass or less, and particularly preferably 0.05 parts by mass or more and 0.3 parts by mass or less with respect to 100 parts by mass of the resin constituting the polyolefin-based resin expanded beads.

In other words, the content of the ammonium nitrate in the expanded beads is preferably 0.02 parts by mass or more, more preferably 0.03 parts by mass or more, still more preferably 0.04 parts by mass or more, and particularly preferably 0.05 parts by mass or more with respect to 100 parts by mass of the resin constituting the polyolefin-based resin expanded beads. The content of the ammonium nitrate in the expanded beads is preferably 0.6 parts by mass or less, more preferably 0.5 parts by mass or less, still more preferably 0.4 parts by mass or less, and particularly preferably 0.3 parts by mass or less with respect to 100 parts by mass of the resin constituting the polyolefin-based resin expanded beads.

The expanded beads of the present invention having such a configuration have an expansion ratio higher than that of comparative expanded beads containing the same composition except that ammonium nitrate is not contained, and formation of excessive cells is suppressed. Therefore, when the expanded beads of the present invention are subjected to in-mold molding, an expanded beads molded article excellent in lightweight and appearance can be provided. In the expanded beads of the present invention in which formation of excessive cells is suppressed, it is considered that wrinkles and irregularities are less likely to be formed on the outer surface of the expanded beads molded article because relatively uniform secondary expansion occurs when the expanded beads are subjected to in-mold molding due to suppression of excessive cells. The pressure range in which molding is possible when the expanded beads are in-mold molded is wide, and an expanded beads molded article excellent in appearance can be easily obtained.

The content of talc in the expanded beads of the present invention is preferably 0.01 parts by mass or more and 0.5 parts by mass or less, more preferably 0.05 parts by mass or more and 0.4 parts by mass or less, and still more preferably 0.07 parts by mass or more and 0.3 parts by mass or less with respect to 100 parts by mass of the resin constituting the polyolefin-based resin expanded beads.

In other words, the content of talc in the expanded beads is preferably 0.01 parts by mass or more, more preferably 0.05 parts by mass or more, and still more preferably 0.07 parts by mass or more with respect to 100 parts by mass of the resin constituting the polyolefin-based resin expanded beads. The content of talc in the expanded beads is preferably 0.5 parts by mass or less, more preferably 0.4 parts by mass or less, and still more preferably 0.3 parts by mass or less with respect to 100 parts by mass of the resin constituting the polyolefin-based resin expanded beads.

The ratio of the content of the ammonium nitrate to the content of the talc is adjusted to preferably 0.2 or more and 6 or less, more preferably 0.3 or more and 5 or less, still more preferably 0.4 or more and 4 or less, and particularly preferably 0.5 or more and 3 or less in terms of a mass ratio.

In other words, the mass ratio is preferably 0.2 or more, more preferably 0.3 or more, still more preferably 0.4 or more, and particularly preferably 0.5 or more. The mass ratio is preferably 6 or less, more preferably 5 or less, still more preferably 4 or less, and particularly preferably 3 or less.

When the ratio of the content of ammonium nitrate to the content of talc is 0.2 or more in terms of a mass ratio, it is easy to realize an appropriately low apparent density, and when the ratio is 6 or less, it is easy to appropriately lower the apparent density and to suppress the formation of excessive cells. The reason for this is not clear, but it is considered that the interaction between talc functioning as a cell nucleating agent and ammonium nitrate has an influence. When the ratio of the addition amount of ammonium nitrate to the addition amount of talc satisfies the above range, the pressure range in which molding is possible when the expanded beads are in-mold molded is wide, and an expanded beads molded article excellent in appearance can be easily obtained.

Note that the content of talc and the content of ammonium nitrate in the expanded beads can be appropriately calculated from the material used for producing the resin particles used for producing the expanded beads. The content of talc and the content of ammonium nitrate in the expanded beads may be directly measured by a conventionally known method.

### [Average cell diameter]

The average cell diameter of the expanded beads of the present invention is in a range of 20 µm or more and 250 µm or less, an appropriate cell diameter is exhibited, and it is suppressed that the cell diameter significantly varies or extremely large cells are included. When the expanded beads in which the average cell diameter is in a specific range and the inclusion of extremely large cells is suppressed are used, the pressure range in which molding is possible when the expanded beads are in-mold molded is wide, and an expanded beads molded article excellent in appearance can be easily obtained. From the viewpoint that an expanded beads molded article excellent in appearance can be easily obtained, the average cell diameter of the expanded beads of the present invention is preferably 40 µm or more and 180 µm or less, and more preferably 60 µm or more and 160 µm or less.

In other words, the average cell diameter of the expanded beads of the present invention is 20 µm or more, preferably 40 µm or more, and more preferably 60 µm or more. The average cell diameter is 250 µm or less, preferably 180 µm or less, and more preferably 160 µm or less.

The average cell diameter of the expanded beads is measured as follows.

A cut surface formed by cutting a randomly selected polyolefin-based resin expanded bead into substantially two equal parts is exposed, and a photograph is taken using a scanning electron microscope so that the entire cut surface is included. The area of each cell is measured by image analysis of all cells observed in the cut surface. For example, WinROOF2021 manufactured by MITANI CORPORATION can be used as an image analyzer. For each cell, the equivalent circle diameter is determined from the Feret's diameter, and the cell diameter is determined from the equivalent circle diameter. This operation is performed on 50 or more expanded beads, and the arithmetic mean value of the average cell diameter of the obtained individual expanded beads is taken as the average cell diameter.

### [Average number of excessive cells]

Formation of excessive cells inside the expanded beads of the present invention is suppressed. In the expanded beads of the present invention, the number of excessive cells is preferably 5 or less, more preferably 4 or less, still more preferably 3 or less, and particularly preferably 0.

The term "excessive cell" of the expanded beads refers to a cell having an area of 5% or more of the area of a cut surface formed by cutting the expanded bead into substantially two equal parts. When the average number of excessive cells is 5 or less, it can be determined that the excessive expansion is effectively suppressed.

The average number of excessive cells is determined as follows. First, an area of a cut surface formed by cutting a randomly selected expanded bead into substantially two equal parts is measured. Then, cells having an area of 5% or more of the area of the cut surface in the cut surface are counted. This operation is performed for 20 expanded beads, and the number of excessive cells of the obtained individual expanded beads is arithmetically averaged, whereby the average number of excessive cells can be determined.

### [Closed cell ratio]

The closed cell ratio of the expanded beads used in the present invention is preferably 80% or more. When the closed cell ratio is in the above range, the secondary expandability of the expanded beads is excellent, so that the pressure range in which molding is possible is wide, and an expanded beads molded article excellent in appearance is easily obtained. From such a viewpoint, the closed cell ratio of the expanded beads is more preferably 85% or more, and still more preferably 90% or more.

The closed cell ratio of the expanded beads can be measured as follows. First, the expanded beads are left to stand for 10 days in a thermostatic chamber under the conditions of atmospheric pressure, a relative humidity of 50%, and 23°C, and aged. Next, in the same thermostatic chamber, an apparent volume Va is accurately measured by a submersion method as described below using the aged expanded beads having a bulk volume of about 20 cm³ as a measurement sample. After the measurement sample whose apparent volume Va has been measured is sufficiently dried, a true volume Vx of the measurement sample measured by, for example, Air Comparison Pycnometer 930 manufactured by Beckman-Toshiba, Ltd. is measured in accordance with Procedure C described in ASTM-D2856-70. Based on these volumes Va and Vx, the closed cell ratio is calculated by the following Expression (1), and the closed cell ratio of the expanded beads can be determined from the average value of N = 5 or more.
[Expression 1]$Closed cell ratio = \left(Vx-W/ρ\right) \times 100 / \left(Va-W/ρ\right)$ (1) provided that, in the above Expression (1), Vx (unit: cm³) is the true volume of the expanded beads (that is, the sum of the volume of the resin constituting the expanded beads and the total cell volume of the closed cell portion in the expanded beads), Va (unit: cm³) is the apparent volume of the expanded beads (that is, the volume is measured from an increase in the liquid level when the expanded beads are immersed in a measuring cylinder containing water), W (unit: g) is the mass of the measurement sample, and ρ (unit: g/cm³) is the density of the polyolefin-based resin constituting the expanded beads. The density of the polyolefin-based resin referred to herein is the density of the base material resin constituting the expanded beads to be measured.

### [Apparent density]

The apparent density of the expanded beads of the present invention is preferably 110 kg/m³ or less, more preferably 100 kg/m³ or less, still more preferably 90 kg/m³ or less, even further preferably 85 kg/m³ or less, and particularly preferably 80 kg/m³ or less.

The lower limit of the apparent density of the expanded beads of the present invention is not particularly limited, but is preferably 10 kg/m³ or more, more preferably 30 kg/m³ or more, and still more preferably 50 kg/m³ or more. In other words, the apparent density of the expanded beads of the present invention is preferably 10 kg/m³ or more and 110 kg/m³ or less, and more preferably 10 kg/m³ or more and 100 kg/m³ or less. The expanded beads of the present invention produced by the production method of the present invention easily exhibit the apparent density in the preferable range described above. Note that, as for the apparent density of the expanded beads of the present invention, the description regarding the expanded beads produced by the production method of the present invention will be appropriately referred to, and thus the detailed description thereof will be omitted here.

### [Standard deviation of cell diameter]

The standard deviation of the cell diameter of the expanded beads of the present invention is not particularly limited, but is preferably 20% or less, and more preferably 15% or less from the viewpoint of obtaining expanded beads having a uniform cell diameter. The lower limit is not particularly limited, but is about 1%. In other words, the cell diameter of the expanded beads of the present invention produced by the production method of the present invention easily indicates the numerical range in the above-described preferable range.

Note that for how to determine the standard deviation of the cell diameter of the expanded beads, reference is made to the description of Examples described later.

### [Moisture content]

The moisture content of the expanded beads of the present invention is not particularly limited, but is preferably 20% or less, more preferably 17% or less, still more preferably 15% or less, and particularly preferably 13% or less from the viewpoint of suppressing shrinkage of the expanded beads immediately after expansion. In other words, the expanded beads of the present invention produced by the production method of the present invention easily exhibit a moisture content in the above-described preferable range.

In the case of expanded beads having a low moisture content immediately after expansion, shrinkage of the expanded beads immediately after expansion is likely to be suppressed, and variation in the weight of the expanded beads due to moisture is suppressed, so that it is easy to stably fill the mold with a certain amount of expanded beads. Since the expanded beads having a low moisture content do not need to be subjected to a drying step, the production efficiency is improved.

The moisture content of the expanded beads is measured by passing the expanded beads through a dehydrator immediately after expansion to remove moisture on the surfaces of the expanded beads, and then measuring the weight of the expanded beads. Thereafter, the expanded beads are dried at 40°C for 24 hours with a constant temperature tester, and the weight of the expanded beads from which the moisture inside the expanded beads has been removed is measured. The moisture content (%) is calculated by dividing the weight loss due to drying at this time by the weight of the expanded beads before drying to convert the weight to a percentage.

### [Carbon black]

The expanded beads of the present invention may contain carbon black. The content of carbon black in the expanded beads of the present invention is preferably 0.5 parts by mass or more and 5.0 parts by mass or less, more preferably 1 part by mass or more and 4.5 parts by mass or less, and still more preferably 1.5 parts by mass or more and 4.0 parts by mass or less with respect to 100 parts by mass of the resin constituting the expanded beads of the present invention.

In other words, the content of carbon black in the expanded beads of the present invention is preferably 0.5 parts by mass or more, more preferably 1 part by mass or more, and still more preferably 1.5 parts by mass or more with respect to 100 parts by mass of the resin constituting the expanded beads of the present invention. The content of carbon black in the expanded beads of the present invention is preferably 5.0 parts by mass or less, more preferably 4.5 parts by mass or less, and still more preferably 4.0 parts by mass or less with respect to 100 parts by mass of the resin constituting the expanded beads of the present invention.

By adjusting the content to the above range, it is possible to provide a sufficiently black expanded beads molded article while adding carbon black in an appropriate amount.

Note that the content of carbon black in the expanded beads can be appropriately calculated from the material used for producing the resin particles used for producing the expanded beads. The content of carbon black in the expanded beads may be directly measured from a test piece cut out from the expanded beads. As the measurement method, the content thereof can be determined by, for example, a thermogravimetric differential thermal analyzer (TG-DTA). In this case, first, measurement based on JIS K 7120-1987 is performed on the expanded beads. Specifically, the weight of the test piece is measured, the test piece is heated from 40°C to 500°C at 10°C/min in a nitrogen atmosphere, the resin constituting the test piece is first decomposed, and then heated to 800°C by changing the atmosphere to an air atmosphere to decompose carbon black, and the weight difference from 500°C to 800°C can be measured as the content of carbon black.

Using the content of the resin constituting the test piece and the content of carbon black measured as described above, the content of carbon black with respect to 100 parts by mass of the resin constituting the expanded beads can be determined.

In the expanded beads of the present invention of an aspect containing carbon black, the ratio of the content of the carbon black to the content of the ammonium nitrate is preferably 1 or more and 50 or less, and more preferably 10 or more and 40 or less in terms of a mass ratio. In other words, the ratio of the content of the carbon black to the content of the ammonium nitrate is preferably 1 or more, and more preferably 10 or more in terms of a mass ratio. The ratio of the content of the carbon black to the content of the ammonium nitrate is preferably 50 or less, and more preferably 40 or less in terms of a mass ratio. By adjusting the ratio to such a range, it is possible to provide polyolefin-based resin expanded beads exhibiting sufficient blackness while sufficiently solving the problems of the present invention such as increasing of the expansion ratio and suppression of excessive cells.

### <Polyolefin-based resin expanded beads molded article>

The expanded beads produced by the production method of the present invention described above or the expanded beads of the present invention are subjected to in-mold molding, whereby a polyolefin-based resin expanded beads molded article can be produced. Such an expanded beads molded article exhibits the effects of the present invention, is lightweight, and is excellent in appearance. Note that, hereinafter, the polyolefin-based resin expanded beads molded article obtained by subjecting the expanded beads produced by the production method of the present invention or the expanded beads of the present invention to in-mold molding may be referred to as an expanded beads molded article related to the present invention.

The in-mold molding method can be appropriately selected from known in-mold molding methods using expanded beads. For example, the expanded beads are filled in a mold having a cavity corresponding to the shape of a desired expanded beads molded article, and the expanded beads filled in the mold are heated by applying a predetermined molding pressure to the expanded beads with a heating medium exemplified by steam. The molding pressure can be adjusted, for example, in a range of 0.2 MPa(G) or more and 0.5 MPa(G) or less. Note that, in the present specification, (G) represents a gauge pressure, that is, a value of the pressure based on the atmospheric pressure. In this way, the expanded beads in the cavity are further expanded by heating, and the expanded beads are fusion-bonded to each other. Next, after completion of heating with a heating medium exemplified by steam, the pressure in the cavity is released, and cooling of the mold and the molded article in the mold is quickly started. When it is confirmed that the pressure (surface pressure) generated on the inner surface of the mold has decreased to be equal to or less than a predetermined value, cooling is terminated, then the expanded beads molded article is taken out from the mold. The cooling method here is not particularly limited, and examples thereof include water cooling. By such a series of molding steps, an expanded beads molded article corresponding to the shape of the cavity is obtained.

The expanded beads molded article related to the present invention is excellent in lightweight and appearance because expanded beads used in its production have a high expansion ratio and suppression of excessive cells. The appearance of the expanded beads molded article related to the present invention is evaluated from the presence or absence of wrinkles and irregularities on the surface of the expanded beads molded article by visual observation.

In particular, the expanded beads molded article related to the present invention molded using expanded beads containing carbon black can exhibit a black color suitable as a member for vehicles.

The molded article density of the expanded beads molded article related to the present invention is preferably 10 kg/m³ or more and 120 kg/m³ or less, more preferably 20 kg/m³ or more and 100 kg/m³ or less, still more preferably 25 kg/m³ or more and 90 kg/m³ or less.

The molded article density (kg/m³) is calculated by dividing the mass of the expanded beads molded article by the volume calculated based on the dimensions.

### Examples

Hereinafter, the present invention will be described in detail with reference to Examples, but the present invention is not limited thereto. First, raw materials of Present Examples and Comparative Examples will be described. Note that, in Examples and Comparative Examples described below, a polypropylene-based resin or a polyethylene-based resin was used as a resin constituting the polyolefin-based resin particles. Ammonium nitrate described later has a thermal decomposition temperature of about 200°C. Note that the term "parts by mass" of the raw materials shown in the tables of Examples indicates the blending amount with respect to 100 parts by mass of the resin used. The term "parts by mass" of carbon black is a pure blending amount with respect to 100 parts by mass of the resin used.

### (Polyolefin-based resin)

Polypropylene-based resin: propylene-ethylene random copolymer, melting point: 142°C
Polyethylene-based resin: linear low-density polyethylene, melting point: 124°C

### (Cell nucleating agent)

Talc: mineral mainly composed of hydrous magnesium silicate (3MgO·4SiO₂·H₂O), manufactured by Matsumura Sangyo Co., Ltd., [product name: Hifiller #12], particle size (d50): 7.5 µm
Zinc borate: trade name "Fire Break ZB" manufactured by Borax

### (Blowing auxiliary agent)

Ammonium nitrate: manufactured by KISHIDA CHEMICAL CO., LTD.
Potassium nitrate: Grade 1, manufactured by Hayashi Pure Chemical Ind., Ltd.
Ammonium sulfate: special grade, manufactured by KISHIDA CHEMICAL CO., LTD.

### (Carbon black)

Carbon black-containing masterbatch: trade name "PP Black Master Batch, BT920F-JSJ" (manufactured by B&Tech Corporation, CB concentration: 45 wt%)

### (Antioxidant)

Hindered phenol stabilizer: trade name "Irganox1010" (pentaerythritol tetrakis[3-(3,5-di-tert-butyl-4-hydroxyphenyl)propionate]) manufactured by BASF SE

### (Example 1)

### <Preparing of polyolefin-based resin particles>

A manufacturing apparatus including an extruder having an inner diameter of 50 mm and a strand forming die attached to the downstream side of the extruder was prepared.

A polyolefin-based resin and raw materials shown in Table 1 were supplied to an extruder and melt-kneaded to obtain a melt-kneaded product. Note that talc and ammonium nitrate were mixed in advance to form a mixture, and then the mixture was supplied to the extruder. The melt-kneaded product was introduced into the strand forming die, the extrusion temperature was adjusted to 200°C, and the strand was extruded. The extruded strand was cooled with water and cut with a pelletizer so that the average weight per strand was 1 mg. As a result, polyolefin-based resin particles to which talc and ammonium nitrate were added were obtained. Note that, in Example 1, a polypropylene-based resin was used as the polyolefin-based resin.

### < Producing of polyolefin-based resin expanded beads>

1 kg of the polyolefin-based resin particles obtained as described above was supplied together with 3 L of water as an aqueous medium into a pressurizable sealed vessel having a content of 5 L. 0.3 parts by mass of kaolin as an inorganic dispersant and 0.2 parts by mass of a surfactant (trade name: NEOGEN, manufactured by DKS Co., Ltd., sodium dodecylbenzenesulfonate) (as an active ingredient) were added to 100 parts by mass of polyolefin-based resin particles in the sealed vessel.

Next, while stirring the sealed vessel, the temperature was raised by heating at a heating rate of 5°C/min until the expansion temperature was reached, carbon dioxide as a blowing agent was then injected into the sealed vessel, and the sealed vessel was pressurized to 2.1 MPa(G) and held at the same temperature and the same pressure for 15 minutes. In this way, the crystal structure of expanded beads to be obtained was adjusted so that a high-temperature peak appeared in the DSC curve obtained by heat-flux differential scanning calorimetry.

Thereafter, the contents (polyolefin-based resin particles and water) in the sealed vessel were released to atmospheric pressure to obtain polyolefin-based resin expanded beads having an apparent density of 75 kg/m³.

Note that, in Examples and Comparative Examples, resin particles were expanded by appropriately adjusting the expansion temperature so that expanded beads having a predetermined apparent density shown in the tables of Examples were obtained.

The measurement of the average cell diameter and the average number of excessive cells of the expanded beads described later was performed using expanded beads conditioned by allowing the expanded particles to stand still for 24 hours under conditions of a relative humidity of 50%, 23°C, and 1 atm.

### <Method for producing polyolefin-based resin expanded beads molded article>

The obtained polyolefin-based resin expanded beads were filled in a mold having a molding cavity capable of molding a plate-like expanded beads molded article having a size of 250 mm in length × 200 mm in width × 20 mm in height, and heated by the following heating method. As the mold, a metal mold was used.

In the heating method, in a state where drain valves provided on both surfaces of the mold were opened, steam was supplied to the mold to perform preheating (exhaust step). Thereafter, steam was supplied from one side of the mold to perform heating, and steam was further supplied from the other side of the mold to perform heating. Subsequently, steam was supplied from both sides of the mold at the lower limit molding pressure shown in the tables of Examples for heating. After completion of heating, the pressure was released and water cooling was immediately started, and water cooling was performed until the pressure generated on the inner surface of the mold by the expansion force of the expanded beads molded article reached 0.04 MPa (G). After completion of water cooling, the expanded beads molded article was taken out from the mold and used as the expanded beads molded article of Example 1.

Note that the evaluation of the appearance and the evaluation of the uniformity of the blackness of the expanded beads molded article described later were performed using an expanded beads molded article conditioned by allowing the expanded beads molded article to stand still for 12 hours under conditions of a relative humidity of 50%, 80°C, and 1 atm after demolding.

In the polyolefin-based resin expanded beads of Example 1 obtained as described above, the synergistic effect of talc and ammonium nitrate was obtained, the apparent density was low, and formation of excessive cells was suppressed.

### (Examples 2 to 6)

Polyolefin-based resin particles, polyolefin-based resin expanded beads, and a polyolefin-based resin expanded beads molded article were produced in the same manner as in Example 1 described above except that the addition amount of ammonium nitrate or talc was changed as shown in Table 1, and these were used as Examples 2 to 6.

In Examples 2 to 6, the addition amount of ammonium nitrate was in an appropriate range, the synergistic effect of talc and ammonium nitrate was obtained as in Example 1, and expanded beads having a low apparent density were obtained. Note that, in Examples 2 to 6, a polypropylene-based resin was used as the polyolefin-based resin.

### (Example 7)

Polyolefin-based resin particles, polyolefin-based resin expanded beads, and a polyolefin-based resin expanded beads molded article were produced in the same manner as in Example 1 except that 2.6 parts by mass of carbon black was added, and these were used as Example 7. Note that, in Example 7, a polypropylene-based resin was used as the polyolefin-based resin.

In Example 7, the blackness was uniform, the synergistic effect of talc and ammonium nitrate was obtained as in Example 1, the apparent density was low, and generation of excessive cells was suppressed.

### (Comparative Examples 1 and 2)

Polyolefin-based resin particles, polyolefin-based resin expanded beads, and a polyolefin-based resin expanded beads molded article were produced in the same manner as in Example 1 except that potassium nitrate or ammonium sulfate was used instead of ammonium nitrate, and these were used as Comparative Examples 1 and 2.

In both Comparative Examples 1 and 2, the apparent density of expanded beads was high, and expanded beads insufficiently increased in expansion ratio were obtained. FIG. 1 shows a cross-sectional photograph of polyolefin-based resin expanded beads of Comparative Example 2. From FIG. 1, excessive cells formed in the polyolefin-based resin expanded beads of Comparative Example 2 are observed. Note that, in Comparative Examples 1 and 2, a polypropylene-based resin was used as the polyolefin-based resin.

### (Comparative Examples 3 and 4)

Polyolefin-based resin particles, polyolefin-based resin expanded beads, and a polyolefin-based resin expanded beads molded article were produced in the same manner as in Example 1 except that ammonium nitrate was not used, and these were used as Comparative Example 3.

Polyolefin-based resin particles, polyolefin-based resin expanded beads, and a polyolefin-based resin expanded beads molded article were produced in the same manner as in Example 1 except that ammonium nitrate was not added and the addition amount of talc was changed to the value as shown in Table 3, and these were used as Comparative Example 4.

In Comparative Example 3, polyolefin-based resin expanded beads having a high apparent density and insufficiently increased in expansion ratio were obtained. By comparison between Comparative Example 3 and Example 1, the significance of using an appropriate amount of ammonium nitrate in combination with talc was confirmed.

Also in Comparative Example 4, polyolefin-based resin expanded beads having a high apparent density and insufficiently increased in expansion ratio were obtained.

From the results of Comparative Example 4, it was suggested that it was difficult to improve the apparent density even when the addition amount of talc was increased. Note that, in Comparative Examples 3 and 4, a polypropylene-based resin was used as the polyolefin-based resin.

### (Reference Example 1)

Polyolefin-based resin particles, polyolefin-based resin expanded beads, and a polyolefin-based resin expanded beads molded article were produced in the same manner as in Example 1 described above except that a change in the contents shown in Table 3 was adopted, zinc borate was used as a cell nucleating agent instead of talc, and ammonium nitrate was not used, and these were used as Reference Example 1.

In Reference Example 1, the apparent density was low, and the average number of excessive cells was also zero. Note that, in Reference Example 1, a polypropylene-based resin was used as the polyolefin-based resin.

### (Examples 8 and 9)

Polyolefin-based resin particles, polyolefin-based resin expanded beads, and a polyolefin-based resin expanded beads molded article were produced in the same manner as in Example 1 except that the extrusion temperature at the time of producing resin particles was changed to 230°C, and 0.3 parts by mass of an antioxidant was added, and these were used as Example 8.

Polyolefin-based resin particles, polyolefin-based resin expanded beads, and a polyolefin-based resin expanded beads molded article were produced in the same manner as in Example 1 except that the extrusion temperature at the time of producing resin particles was changed to 230°C, and these were used as Example 9.

In Example 8, although the extrusion temperature was higher than that in Example 1, no excessive cells were observed in the expanded beads as in Example 1. This is considered to be because excessive cells during expansion were suppressed, and no cells were observed in the resin particles. The effect of adding an antioxidant was confirmed in Example 8.

In Example 9, 0.2 excessive cells were observed in the expanded beads. This is considered to be derived from the cells contained in the resin particles although the excessive cells during expansion were suppressed. In other words, expanded beads and an expanded beads molded article that can withstand practical use were obtained even when the extrusion temperature was higher than that in Example 1. Note that, in Examples 8 and 9, a polypropylene-based resin was used as the polyolefin-based resin.

### (Example 10)

Polyolefin-based resin particles, polyolefin-based resin expanded beads, and a polyolefin-based resin expanded beads molded article were produced in the same manner as in Example 4 except that the conditions were changed to the following conditions, and these were used as Example 10.
· A polyethylene-based resin was used as the polyolefin-based resin.
· Ammonium nitrate as a blowing auxiliary agent was added in an amount of 0.1 parts by mass.
·The extrusion temperature at the time of producing resin particles was changed to 220°C.
· In the producing of polyolefin-based resin expanded beads, carbon dioxide as a blowing agent was injected into a sealed vessel, and the sealed vessel was pressurized to 4.0 MPa(G) and held at the same temperature and the same pressure for 20 minutes.
· In the producing of a polyolefin-based resin expanded beads molded article, water cooling was performed until the pressure generated on the inner surface of the mold reached 0.02 MPa(G) after completion of heating with the lower limit molding pressure shown in the tables of Examples.

### (Comparative Example 5)

Polyolefin-based resin particles, polyolefin-based resin expanded beads, and a polyolefin-based resin expanded beads molded article were produced in the same manner as in Example 10 except that ammonium nitrate was not used, and these were used as Comparative Example 5. In Comparative Example 5, carbon dioxide was used as the blowing agent, and talc was used as the cell nucleating agent, so that the apparent density of the expanded beads was high.

The polyolefin-based resin particles, the polyolefin-based resin expanded beads, and the polyolefin-based resin expanded beads molded article obtained as described above were subjected to the following measurement or evaluation with respect to each Example, each Comparative Example, and the Reference Example 1. The results are shown in Tables 1 to 3.

### <Evaluation of suppression of cell generation of resin particles>

100 polyolefin-based resin particles were randomly selected, each resin particle was divided into approximately two equal parts, and the cross section was observed using a scanning electron microscope to confirm the presence or absence of cells in each resin particle, and evaluated according to the following criteria.
A: In 100 resin particles, no resin particles including cells were observed.
B: In 100 resin particles, 1 or more and less than 5 resin particles including cells were observed.
C: In 100 resin particles, 5 or more resin particles including cells were observed.

### <Apparent density of expanded beads>

The apparent density (kg/m³) of the polyolefin-based resin expanded beads was determined by the following measurement method.

First, a measuring cylinder containing water at a temperature of 23°C was prepared, and about 500 ml of polyolefin-based resin expanded beads (mass W1) that had been conditioned by standing for 48 hours under conditions of a relative humidity of 50%, 23°C, and 1 atm were immersed in the measuring cylinder using a wire mesh. Then, in consideration of the volume of the wire mesh, the volume V1 (cm³) of the polyolefin-based resin expanded beads read from the water level rise was measured, and the mass W1 (g) of the polyolefin-based resin expanded beads put in the measuring cylinder was divided by the volume V1 (cm³) (W1/V1), whereby the apparent density of the polyolefin-based resin expanded beads was determined.

### <Average cell diameter of expanded beads>

A cut surface formed by cutting a randomly selected polyolefin-based resin expanded bead into substantially two equal parts was exposed. Then, a photograph was taken using a scanning electron microscope so that the entire cut surface was included. The area of each cell was measured by image analysis of all cells observed in the cut surface. WinROOF2021 manufactured by MITANI CORPORATION was used as an image analyzer. For each cell, the equivalent circle diameter was determined from the Feret's diameter, and the cell diameter was determined from the equivalent circle diameter. This operation was performed on 50 expanded beads, and the arithmetic mean value of the average cell diameter of the obtained individual expanded beads was taken as the average cell diameter.

### <Average number of excessive cells of expanded beads>

A cut surface formed by cutting a randomly selected polyolefin-based resin expanded bead into substantially two equal parts was exposed. Then, a photograph was taken using a scanning electron microscope so that the entire cut surface was included. The area of each cell was measured by image analysis of all cells observed in the cut surface. WinROOF2021 manufactured by MITANI CORPORATION was used as an image analyzer. For each cell, the equivalent circle diameter was determined from the Feret's diameter, and the cell area was determined from the equivalent circle diameter. For the area of the cut surface of the expanded beads, the equivalent circle diameter was determined from the Feret's diameter, and the area of the cut surface of the expanded beads was determined from the equivalent circle diameter. Cells having an area of 5% or more of the area of the cut surface in the cut surface were counted. This operation was performed for 20 expanded beads, and the number of excessive cells of the obtained individual expanded beads was arithmetically averaged, whereby the average number of excessive cells was determined.

### <Closed cell ratio of expanded beads>

The closed cell ratio of the expanded beads was measured as follows. First, the expanded beads were left to stand for 10 days in a thermostatic chamber under the conditions of atmospheric pressure, a relative humidity of 50%, and 23°C, and aged. Next, in the same thermostatic chamber, the apparent volume Va was accurately measured by a submersion method as described below using the aged expanded beads having a bulk volume of about 20 cm³ as a measurement sample. After the measurement sample whose apparent volume Va had been measured was sufficiently dried, the true volume Vx of the measurement sample measured by Air Comparison Pycnometer 930 manufactured by Beckman-Toshiba, Ltd. was measured in accordance with Procedure C described in ASTM-D2856-70. Based on these volumes Va and Vx, the closed cell ratio was calculated by the following Expression (1), and the average value of N = 5 was taken as the closed cell ratio of the expanded beads.
[Expression 2]$Closed cell ratio = \left(Vx-W/ρ\right) \times 100 / \left(Va-W/ρ\right)$ (1)

provided that, in the above Expression (1), Vx (unit: cm³) is the true volume of the expanded beads (that is, the sum of the volume of the resin constituting the expanded beads and the total cell volume of the closed cell portion in the expanded beads), Va (unit: cm³) is the apparent volume of the expanded beads (that is, the volume is measured from an increase in the liquid level when the expanded beads are immersed in a measuring cylinder containing water), W (unit: g) is the mass of the measurement sample, and ρ (unit: g/cm³) is the density of the polyolefin-based resin constituting the expanded beads. The density of the polyolefin-based resin referred to herein is the density of the base material resin constituting the expanded beads to be measured.

### <Heat of fusion of high-temperature peak of expanded beads>

In accordance with JIS K7122-2024, by heat-flux differential scanning calorimetry, a first DSC curve was obtained which was measured when 2 mg of expanded beads were used as a test piece and heated and melted at a heating rate of 10°C/min from 23°C to a temperature higher than that at the time of end of the melting peak by 30°C.

Next, in the first DSC curve, a straight line connecting a point I corresponding to 80°C on the DSC curve and a point II corresponding to the end temperature of melting of the expanded beads was drawn. Note that the point II indicating the end temperature of melting is an end point on the high temperature side of the high-temperature peak, and is an intersection of the high-temperature peak and the baseline on the higher temperature side than the high-temperature peak in the DSC curve.

After a straight line connecting the point I and the point II was drawn as described above, an intersection of a straight line passing through the maximum point III existing between the intrinsic peak and the high-temperature peak and parallel to the vertical axis of the graph and a straight line connecting the point I and the point II was defined as IV.

An area of a portion surrounded by a straight line connecting the point IV and the point II, a straight line connecting the point III and the point IV, and a DSC curve connecting the point III and the point II was defined as an area of the high-temperature peak. The value of the heat of fusion (J/g) of the high-temperature peak was calculated from the area of the high-temperature peak determined as described above.

### <Standard deviation of cell diameter of expanded beads>

As described above, the average cell diameter of cell diameters of 20 expanded beads was determined, and the value given by the square root of unbiased dispersion was taken as the standard deviation.

### <Moisture content of expanded beads>

The moisture content of the expanded beads was measured by the following method. Immediately after expansion, moisture on the surfaces was removed by passing the expanded beads through a dehydrator, and then the weight of the expanded beads was measured. Thereafter, the expanded beads were dried at 40°C for 24 hours with a constant temperature tester, and the weight of the expanded beads from which the moisture inside the expanded beads had been removed was measured. The moisture content (%) was calculated by dividing the weight loss due to drying at this time by the weight of the expanded beads before drying to convert the weight to a percentage.

### <Evaluation of appearance of expanded beads molded article>

The appearance of the obtained polyolefin-based resin expanded beads molded article was visually observed and evaluated according to the following criteria.
A: No wrinkles or irregularities were observed on the outer surface of the expanded beads molded article.
B: Wrinkles and/or irregularities were hardly observed on the outer surface of the expanded beads molded article.
C: Wrinkles and/or irregularities were observed in some parts on the outer surface of the expanded beads molded article.

### <Evaluation of uniformity of blackness of expanded beads molded article>

The uniformity of the blackness of the expanded beads molded article obtained in Example 7 was evaluated as follows. The color unevenness on the surface of the molded article was visually evaluated in the following five-grade evaluation, and the color unevenness of the expanded beads molded article was evaluated according to the following criteria based on the average value of the evaluations of five viewers.

### (Five-grade evaluation)

5 points: The surface of the molded article exhibits a uniform black color.
4 points: The surface of the molded article exhibits a substantially uniform black color.
3 points: Color unevenness was slightly confirmed on the surface of the molded article.
2 points: Color unevenness was scattered on the surface of the molded article.
1 point: Significant color unevenness was observed in a very large amount on the surface of the molded article.

### (Evaluation of blackness)

A: 4 or more points
B: 3 or more and less than 4 points
C: 2 or more and less than 3 points
D: Less than 2 points

### <Molded article density of expanded beads molded article>

The molded article density was calculated by dividing the mass of the expanded beads molded article by the volume calculated based on the dimensions.

### <Moldable pressure range of expanded beads molded article>

Using the expanded beads obtained in Examples and Comparative Examples, in-mold molding was performed as follows, and evaluation was performed as follows.

In Examples and Comparative Examples performed using a polypropylene-based resin, in-mold molding was performed in which an expanded beads molded article was experimentally molded while the molding pressure in the in-mold molding was changed by 0.02 MPa between 0.20 MPa(G) or more and 0.40 MPa(G) or less. That is, in-mold molding was performed at a molding pressure of 11 points in total. Note that the lowest molding pressure in the moldable range confirmed as follows is referred to as a lower limit molding pressure.

In Examples and Comparative Examples performed using a polyethylene-based resin, in-mold molding was performed in which an expanded beads molded article was experimentally molded while the molding pressure in the in-mold molding was changed by 0.02 MPa between 0.08 MPa(G) or more and 0.20 MPa(G) or less. That is, in-mold molding was performed at a molding pressure of 7 points in total.

It was determined whether or not the expanded beads molded article obtained by the in-mold molding performed as described above passed three criteria (fusion-bonding property, appearance, and recoverability) shown below. Then, the expanded beads molded article that passed all the criteria was regarded as an acceptable product, and the moldable pressure range in which the acceptable product was obtained was evaluated according to the following criteria (moldable pressure range). Note that MPa(G) represents a gauge pressure. The in-mold moldability was evaluated by examining the moldable pressure range. The wider the range from the lower limit value to the upper limit value of the moldable pressure, the wider the moldable range, which is suitable.

### (Fusion-bonding property)

The fusion-bonding property of the expanded beads molded article was evaluated by the following method. The plate-shaped expanded beads molded article was bent and broken, and the number (C1) of expanded beads present on the fracture surface and the number (C2) of expanded beads which were present at the fracture surface and had undergone material fracture were determined. The ratio (C2/C1 × 100) of the number (C2) of broken expanded beads to the number (C1) of expanded beads was calculated as the material fracture rate, and a case where the value was 80% or more was determined as acceptable.

### (Appearance)

A 100 mm × 100 mm rectangle was drawn in the vicinity of the center of the surface of 250 mm in length × 200 mm in width of the expanded beads molded article, a line was drawn diagonally from the corner of the rectangular area, and the number of voids having a size of a short diameter of 1 mm or more × a long diameter of 1 mm or more present on the line was counted. A case where the number of voids was less than 5 was determined as acceptable because the appearance was favorable. Note that the term "void" as used herein specifically refers to a gap between the expanded beads.

### (Recoverability)

The expanded beads molded article was allowed to stand still in an environment at a temperature of 23°C and a relative humidity of 50% for 24 hours. Thereafter, the surface of the expanded beads molded article was observed, and the presence or absence of generation of wrinkles was confirmed. The thicknesses of the central portion of the main surface (that is, the surface having the largest area) of the flat plate-shaped molded article and the four corner portions of the main surface were measured, and the ratio of the thickness of the central portion to the thickness of the thickest one of the four corner portions was calculated. A case where no or little wrinkles were observed and the ratio was 95% or more was determined as acceptable.

### (Moldable pressure range)

A: There are three or more molding pressures at which an acceptable product can be molded.
B: There are two molding pressures at which an acceptable product can be molded.
C: There is one molding pressure at which an acceptable product can be molded.
D: An acceptable product could not be molded at any molding pressure.

**[Table 1]**

| | | | Example 1 | Example 2 | Example 3 | Example 4 | Example 5 | Example 6 |
|---|---|---|---|---|---|---|---|---|
| Raw material | Cell nucleating agent | - | Talc | Talc | Talc | Talc | Talc | Talc |
| | | parts by mass | 0,1 | 0,1 | 0,1 | 0,1 | 0,1 | 0,2 |
| | Blowing auxiliary agent | - | NH₄NO₃ | NH₄NO₃ | NH₄NO₃ | NH₄NO₃ | NH₄NO₃ | NH₄NO₃ |
| | | parts by mass | 0,1 | 0,05 | 0,02 | 0,3 | 0,6 | 0,1 |
| | Carbon black | parts by mass | - | - | - | - | - | - |
| | Blowing auxiliary agent/cell nucleating agent | - | 1 | 0,5 | 0,2 | 3 | 6 | 0,5 |
| | Cell nucleating agent + Blowing auxiliary agent | - | 0,2 | 0,15 | 0,12 | 0,4 | 0,7 | 0,3 |
| | Antioxidant | parts by mass | - | - | - | - | - | - |
| Resin particles | Extrusion temperature | °C | 200 | 200 | 200 | 200 | 200 | 200 |
| | Evaluation of suppression of cell generation | - | A | A | A | A | A | A |
| Expanded beads | Apparent density | kg/m³ | 75 | 93 | 103 | 59 | 51 | 67 |
| | Average cell diameter | *µ*m | 125 | 100 | 80 | 160 | 200 | 100 |
| | Average number of excessive cells | number | 0 | 0 | 0 | 4 | 7,8 | 0 |
| | Closed cell ratio | % | 94 | 95 | 95 | 93 | 92 | 95 |
| | Heat of fusion of high-temperature peak | J/g | 15,4 | 15,3 | 15,1 | 15,6 | 16,1 | 15,9 |
| | Standard deviation of cell diameter | % | 15 | 12 | 10 | 17 | 22 | 15 |
| | Moisture content | % | 10 | 9 | 7 | 12 | 19 | 10 |
| Expanded beads molded article | Evaluation of appearance | - | A | A | A | A | B | B |
| | Evaluation of uniformity of blackness | - | - | - | - | - | - | - |
| | Molded article density | kg/m³ | 65 | 77 | 87 | 51 | 43 | 58 |
| | Moldable pressure range | MPa(G) | 0.28-0.32 | 0.32-0.34 | 0,34 | 0.26-0.30 | 0,26 | 0.28-0.32 |
| | Evaluation of moldable pressure range | - | A | B | C | A | C | A |

**[Table 2]**

| | | | Example 7 | Example 8 | Example 9 | Comparative Example 1 | Comparative Example 2 |
|---|---|---|---|---|---|---|---|
| Raw material | Cell nucleating agent | - | Talc | Talc | Talc | Talc | Talc |
| | | parts by mass | 0,1 | 0,1 | 0,1 | 0,1 | 0,1 |
| | Blowing auxiliary agent | - | NH₄NO₃ | NH₄NO₃ | NH₄NO₃ | KNO₃ | (NH₄)₂SO₄ |
| | | parts by mass | 0,1 | 0,1 | 0,1 | 0,1 | 0,1 |
| | Carbon black | parts by mass | 2,6 | - | - | - | - |
| | Blowing auxiliary agent/cell nucleating agent | - | 1 | 1 | 1 | 1 | 1 |
| | Cell nucleating agent + Blowing auxiliary agent | - | 0,2 | 0,2 | 0,2 | 0,2 | 0,2 |
| | Antioxidant | parts by mass | - | 0,3 | - | - | - |
| Resin particles | Extrusion temperature | °C | 200 | 230 | 230 | 200 | 200 |
| | Evaluation of suppression of cell generation | - | A | A | B | A | A |
| Expanded beads | Apparent density | kg/m³ | 77 | 74 | 75 | 115 | 121 |
| | Average cell diameter | *µ*m | 140 | 140 | 125 | 85 | 98 |
| | Average number of excessive cells | number | 0 | 0 | 0,2 | 0 | 2 |
| | Closed cell ratio | % | 95 | 95 | 88 | 95 | 95 |
| | Heat of fusion of high-temperature peak | J/g | 16,3 | 15,1 | 15 | 13,7 | 13,3 |
| | Standard deviation of cell diameter | % | 15 | 15 | 15 | - | - |
| | Moisture content | % | 10 | 10 | 10 | 11 | 12 |
| Expanded beads molded article | Evaluation of appearance | - | A | A | A | A | B |
| | Evaluation of uniformity of blackness | - | B | - | - | - | |
| | Molded article density | kg/m³ | 65 | 60 | 65 | 96 | 101 |
| | Moldable pressure range | MPa(G) | 0.28-0.32 | 0.28-0.32 | 0.30-0.32 | 0,34 | 0,36 |
| | Evaluation of moldable pressure range | - | A | A | B | C | C |

**[Table 3]**

| | | | Comparative Example 3 | Comparative Example 4 | Reference Example 1 | Example 10 | Comparative Example 5 |
|---|---|---|---|---|---|---|---|
| Raw material | Cell nucleating agent | - | Talc | Talc | Zinc borate | Talc | Talc |
| | | parts by mass | 0,1 | 0,2 | 0,1 | 0,1 | 0,1 |
| | Blowing auxiliary agent | - | Absent | Absent | Absent | NH₄NO₃ | Absent |
| | | parts by mass | 0 | 0 | 0 | 0,1 | 0 |
| | Carbon black | parts by mass | - | - | - | - | - |
| | Blowing auxiliary agent/cell nucleating agent | - | - | - | - | 1 | - |
| | Cell nucleating agent + Blowing auxiliary agent | - | 0,1 | 0,2 | 0,1 | 0,2 | 0,1 |
| | Antioxidant | parts by mass | - | - | - | - | - |
| Resin particles | Extrusion temperature | °C | 200 | 200 | 200 | 220 | 220 |
| | Evaluation of suppression of cell generation | - | A | A | A | A | A |
| Expanded beads | Apparent density | kg/m³ | 115 | 111 | 67 | 95 | 135 |
| | Average cell diameter | *µ*m | 65 | 50 | 110 | 48 | 41 |
| | Average number of excessive cells | number | 0 | 0 | 0 | 0 | 0 |
| | Closed cell ratio | % | 95 | 95 | 95 | 94 | 93 |
| | Heat of fusion of high-temperature peak | J/g | 14,1 | 14,7 | 14,7 | 28,1 | 29,8 |
| | Standard deviation of cell diameter | % | 10 | 8 | 16 | 7 | 17 |
| | Moisture content | % | 10 | 11 | 15 | 9 | 9 |
| Expanded beads molded article | Evaluation of appearance | - | A | A | A | A | A |
| | Evaluation of uniformity of blackness | - | - | - | - | - | - |
| | Molded article density | kg/m³ | 96 | 93 | 57 | 79 | 108 |
| | Moldable pressure range | MPa(G) | 0,36 | 0,34 | 0.26-0.30 | 0.12-0.14 | 0.12-0.14 |
| | Evaluation of moldable pressure range | - | C | C | A | B | B |

The embodiment includes the following technical idea.
(1) A method for producing polyolefin-based resin expanded beads, the method including: releasing carbon dioxide-containing polyolefin-based resin particles dispersed in an aqueous medium in a sealed vessel from the inside of the sealed vessel at a pressure lower than the pressure in the sealed vessel; and expanding the polyolefin-based resin particles, wherein
   the polyolefin-based resin particles contain ammonium nitrate and talc.
(2) The method for producing polyolefin-based resin expanded beads according to (1), wherein an addition amount of the talc is 0.01 parts by mass or more and 0.5 parts by mass or less with respect to 100 parts by mass of the resin constituting the polyolefin-based resin particles.
(3) The method for producing polyolefin-based resin expanded beads according to (1) or (2), wherein a ratio of an addition amount of the talc to an addition amount of the ammonium nitrate is 0.3 or more and 5 or less in terms of a mass ratio.
(4) The method for producing polyolefin-based resin expanded beads according to any one of (1) to (3), wherein a total of an addition amount of the talc and an addition amount of the ammonium nitrate is 0.04 parts by mass or more and 0.5 parts by mass or less with respect to 100 parts by mass of the resin constituting the polyolefin-based resin particles.
(5) The method for producing polyolefin-based resin expanded beads according to any one of (1) to (4), wherein an apparent density of the expanded beads is 10 kg/m³ or more and 100 kg/m³ or less.
(6) The method for producing polyolefin-based resin expanded beads according to any one of (1) to (5), wherein the polyolefin-based resin particles contain carbon black, and an addition amount of the carbon black is 0.5 parts by mass or more and 5 parts by mass or less with respect to 100 parts by mass of the resin constituting the polyolefin-based resin particles.
(7) The method for producing polyolefin-based resin expanded beads according to (6), wherein a ratio of the addition amount of the carbon black to an addition amount of the ammonium nitrate is 1 or more and 50 or less in terms of a mass ratio.
(8) Polyolefin-based resin expanded beads, wherein the polyolefin-based resin expanded beads have an average cell diameter of 20 µm or more and 250 µm or less, and contain ammonium nitrate and talc.
(9) The polyolefin-based resin expanded beads according to (8), wherein a content of the talc is 0.01 parts by mass or more and 0.5 parts by mass or less with respect to 100 parts by mass of the resin constituting the polyolefin-based resin expanded beads.
(10) The polyolefin-based resin expanded beads according to (8) or (9), wherein an apparent density of the polyolefin-based resin expanded beads is 10 kg/m³ or more and 100 kg/m³ or less.
(11) The polyolefin-based resin expanded beads according to any one of (8) to (10), wherein a ratio of a content of the ammonium nitrate to a content of the talc is 0.3 or more and 5 or less in terms of a mass ratio.
(12) The polyolefin-based resin expanded beads according to any one of (8) to (11), wherein a total of a content of the talc and a content of the ammonium nitrate is 0.04 parts by mass or more and 0.5 parts by mass or less with respect to 100 parts by mass of the resin constituting the polyolefin-based resin expanded beads.
(13) The polyolefin-based resin expanded beads according to any one of (8) to (12), wherein the polyolefin-based resin expanded beads contain carbon black, and a content of the carbon black is 0.5 parts by mass or more and 5 parts by mass or less with respect to 100 parts by mass of the resin constituting the polyolefin-based resin expanded beads.
(14) The polyolefin-based resin expanded beads according to (13), wherein a ratio of the content of the carbon black to a content of the ammonium nitrate is 1 to 50 in terms of a mass ratio.

## Claims

1. A method for producing polyolefin-based resin expanded beads, the method comprising: releasing carbon dioxide-containing polyolefin-based resin particles dispersed in an aqueous medium in a sealed vessel from the inside of the sealed vessel at a pressure lower than the pressure in the sealed vessel; and expanding the polyolefin-based resin particles, wherein
the polyolefin-based resin particles contain ammonium nitrate and talc.

2. The method for producing polyolefin-based resin expanded beads according to claim 1, wherein an addition amount of the talc is 0.01 parts by mass or more and 0.5 parts by mass or less with respect to 100 parts by mass of the resin constituting the polyolefin-based resin particles.

3. The method for producing polyolefin-based resin expanded beads according to claims 1 or 2, wherein a ratio of an addition amount of the talc to an addition amount of the ammonium nitrate is 0.3 or more and 5 or less in terms of a mass ratio.

4. The method for producing polyolefin-based resin expanded beads according to any one of claims 1 to 3, wherein a total of an addition amount of the talc and an addition amount of the ammonium nitrate is 0.04 parts by mass or more and 0.5 parts by mass or less with respect to 100 parts by mass of the resin constituting the polyolefin-based resin particles.

5. The method for producing polyolefin-based resin expanded beads according to any one of claims 1 to 4, wherein an apparent density of the expanded beads is 10 kg/m³ or more and 100 kg/m³ or less.

6. The method for producing polyolefin-based resin expanded beads according to any one of claims 1 to 5, wherein the polyolefin-based resin particles contain carbon black, and an addition amount of the carbon black is 0.5 parts by mass or more and 5 parts by mass or less with respect to 100 parts by mass of the resin constituting the polyolefin-based resin particles.

7. The method for producing polyolefin-based resin expanded beads according to claim 6, wherein a ratio of the addition amount of the carbon black to an addition amount of the ammonium nitrate is 1 or more and 50 or less in terms of a mass ratio.

8. Polyolefin-based resin expanded beads, wherein the polyolefin-based resin expanded beads have an average cell diameter of 20 µm or more and 250 µm or less, and contain ammonium nitrate and talc.

9. The polyolefin-based resin expanded beads according to claim 8, wherein a content of the talc is 0.01 parts by mass or more and 0.5 parts by mass or less with respect to 100 parts by mass of the resin constituting the polyolefin-based resin expanded beads.

10. The polyolefin-based resin expanded beads according to claim 8 or 9, wherein a total of a content of the talc and a content of the ammonium nitrate is 0.04 parts by mass or more and 0.5 parts by mass or less with respect to 100 parts by mass of the resin constituting the polyolefin-based resin expanded beads.

11. The polyolefin-based resin expanded beads according to any one of claims 8 to 10, wherein an apparent density of the polyolefin-based resin expanded beads is 10 kg/m³ or more and 100 kg/m³ or less.

12. The polyolefin-based resin expanded beads according to any one of claims 8 to 11, wherein a ratio of a content of the ammonium nitrate to a content of the talc is 0.3 or more and 5 or less in terms of a mass ratio.

13. The polyolefin-based resin expanded beads according to any one of claims 8 to 12, wherein the polyolefin-based resin expanded beads contain carbon black, and a content of the carbon black is 0.5 parts by mass or more and 5 parts by mass or less with respect to 100 parts by mass of the resin constituting the polyolefin-based resin expanded beads.

14. The polyolefin-based resin expanded beads according to any one of claims 8 to 13, wherein a ratio of the content of the carbon black to a content of the ammonium nitrate is 1 or more and 50 or less in terms of a mass ratio.
